# EUROPEAN PATENT APPLICATION

(11) **EP 4 030 228 A1**
(43) Date of publication of application: **20.07.2022**
(21) Application number: 20862196.1
(22) Date of filing: 20.08.2020
(51) Int. Cl.: G02F 1/1516, G02F 1/153, G09F 9/30, G09F 9/37, G02F 1/15

(54) **METHOD OF MANUFACTURING FLEXIBLE ELECTROCHROMIC DEVICE**

(30) Priority: 11.09.2019 KR 20190112528
(71) Applicant: Swis Co., Ltd., Chungcheongnam-do 31035 (KR)
(72) Inventor: KIM, Jeong Geun, Cheonan-si Chungcheongnam-do 31019 (KR)
(74) Representative: Scheele Wetzel Patentanwälte
(86) International application number: PCT/KR2020/011102
(87) International publication number: WO 2021/049773

(57) **Abstract**

The present disclosure relates to a method for manufacturing a flexible electrochromic device, and more particularly, to a method for manufacturing a flexible electrochromic device that bonds an electrochromic part and a counter electrode part while solidifying a wet-coated electrolyte with ultraviolet rays, thereby being capable of eliminating the possibility of bubble generation in the electrolyte and improving transmittance characteristics and durability.

## Description

### [Technical Field]

The present disclosure relates to a method for manufacturing a flexible electrochromic device, and more particularly, to a method for manufacturing a flexible electrochromic device that bonds an electrochromic part and a counter electrode part while solidifying a wet-coated electrolyte with ultraviolet rays, thereby being capable of eliminating the possibility of bubble generation in the electrolyte and improving transmittance characteristics and durability.

### [Background Art]

This section provides background information related to the present disclosure which is not necessarily prior art.

As technologies for implementing smart glass with adjustable light transmittance, technologies using electrochromic (EC) materials, polymer dispersed liquid crystals (PDLC), and suspended particle devices (SPD) have been known.

Among the technologies, the technology using the electrochromic material has an advantage in that drive voltage and electric power consumption are low in comparison with the technologies using the PDLC and the SPD.

The technology using the electrochromic material uses an oxidation-reduction reaction of the material.

In general, this technology provides a configuration in which a transparent electrode layer, an electrochromic layer, an electrolyte layer, a counter electrode layer, and a transparent electrode layer are sequentially formed on a glass substrate.

A supply of power is allowed or cut off by the transparent electrode layer. The electrochromic layer (WxOy, MoxOy, etc.), which is a cathodic coloration material, is colored when electrons and cations such as Li⁺ or H⁺ are doped into the electrochromic layer, and the electrochromic layer becomes transparent when the electrons and the cations are discharged from the electrochromic layer. On the contrary, the counter electrode layer (VxOy, NixOy, IrxOy, MnxOy, etc.), which is an anodic coloration material, is colored when electrons and cations such as Li⁺ or H⁺ are discharged from the counter electrode layer, and the counter electrode layer becomes transparent when the electrons and the cations are doped into the counter electrode layer.

Meanwhile, an electrochromic device using an electrochromic material changes in color as ionic materials move. Therefore, it is necessary to quickly move the ionic materials to improve color change efficiency and reduce color change time.

The operation (switching time) of the electrochromic device may be improved by a low resistance value.

In general, the electrochromic device uses a transparent conductive film as a transparent electrode layer, and the transparent conductive film is made of aluminum-doped zinc oxide (AZO), fluorine-doped tin oxide (FTO), indium tin oxide (ITO), silver nanowires (AgNWs), poly(3,4-ethylenedioxythiophene) polystyrene sulfonate (PEDOT:PSS), or the like.

However, when the transparent conductive film is manufactured as a single film, the electrical resistance is as high as 100 ohm/sq or more. In addition, it is necessary to increase a thickness (about 100 nm or more) of the transparent conductive film to reduce the resistance value, and the electrical resistance of about 40 ohm/sq may be obtained.

However, the thick transparent conductive film is broken when a substrate made of a flexible material is used, which may cause an electrical short circuit and a deterioration in reliability of the electrochromic device.

### [Disclosure]

### [Technical Problem]

An object of the present disclosure is to provide a method of manufacturing a flexible electrochromic device that bonds an electrochromic part and a counter electrode part while solidifying a wet-coated electrolyte with ultraviolet rays, thereby being capable of eliminating the possibility of bubble generation in the electrolyte and improving transmittance characteristics and durability.

### [Technical Solution]

This section provides a general summary of the disclosure and is not a comprehensive disclosure of its full scope or all of its features.

One aspect of the present disclosure provides a method of manufacturing a flexible electrochromic device, the method including: a first step of preparing first and second substrates made of a flexible polymer; a second step of forming an electrochromic part including a first transparent electrode layer formed on the first substrate by roll-to-roll sputtering and made of a material selected from a group consisting of indium tin oxide (ITO), aluminum-doped zinc oxide (AZO), and fluorine-doped tin oxide (FTO), and an electrochromic layer formed on the first transparent electrode layer by roll-to-roll wet coating or roll-to-roll sputtering; a third step of forming a counter electrode part including a second transparent electrode layer formed on the second substrate by roll-to-roll sputtering and made of a material selected from a group consisting of indium tin oxide (ITO), aluminum-doped zinc oxide (AZO), and fluorine-doped tin oxide (FTO), and a counter electrode layer formed on the second transparent electrode layer by roll-to-roll wet coating or roll-to-roll sputtering; a fourth step of forming an electrolyte layer by wet coating on the electrochromic layer of the first substrate or the counter electrode layer of the second substrate; and a fifth step of bonding the electrochromic part and the counter electrode part while solidifying the electrolyte layer so that the counter electrode layer and the electrochromic layer face each other.

In the method of manufacturing a flexible electrochromic device according to one aspect of the present disclosure, the second step may include forming a first current dispersion layer on the first substrate by roll-to-roll wet coating by using a material selected from a group consisting of silver nanowires (AgNWs), a conductive polymer (PEDOT:PSS), and a metal mesh before forming the first transparent electrode layer, and the third step may include forming a second current dispersion layer on the second substrate by roll-to-roll wet coating by using a material selected from a group consisting of silver nanowires (AgNWs), a conductive polymer (PEDOT:PSS), and a metal mesh before forming the second transparent electrode layer.

In the method of manufacturing a flexible electrochromic device according to one aspect of the present disclosure, the first and second substrates may be made of a material selected from a group consisting of polyethylene terephthalate (PET), polyimide (PI), and polyethylene naphthalate (PEN).

In the method of manufacturing a flexible electrochromic device according to one aspect of the present disclosure, the second step may include forming a first electrolyte protective layer made of tantalum oxide (TaₓO_{y}, 2 ≤ x ≤ 3, 3 ≤ y ≤ 6) on the electrochromic layer by roll-to-roll sputtering, and the third step may include forming a second electrolyte protective layer made of tantalum oxide (TaₓO_{y}, 2 ≤ x ≤ 3, 3 ≤ y ≤ 6) on the counter electrode layer by roll-to-roll sputtering.

In the method of manufacturing a flexible electrochromic device according to one aspect of the present disclosure, the fifth step may include sequentially bonding the electrochromic part and the counter electrode part while solidifying the electrolyte layer by irradiating the electrolyte layer with ultraviolet rays.

In the method of manufacturing a flexible electrochromic device according to one aspect of the present disclosure, the first and second current dispersion layers may each have a thickness with sheet resistance of 40 to 60 ohm/sq, and the thicknesses of the first and second transparent electrode layers may be set such that a first composite layer including the first transparent electrode layer and the first current dispersion layer and a second composite layer including the second transparent electrode layer and the second current dispersion layer each have sheet resistance of 5 to 20 ohm/sq.

In the method of manufacturing a flexible electrochromic device according to one aspect of the present disclosure, the electrolyte layer may be made of a material selected from a group consisting of LiAlF₆, LiPON, and gel and liquid electrolytes, the electrochromic layer may be made of a material selected from a group consisting of WO₃, polyaniline, and viologen, and the counter electrode layer may be made of a material selected from a group consisting of V₂O₅ and NiO.

In the method of manufacturing a flexible electrochromic device according to one aspect of the present disclosure, the electrolyte layer may have a thickness of 100 um or less.

### [Advantageous Effects]

According to the present disclosure, the method bonds the electrochromic part and the counter electrode part while solidifying the wet-coated electrolyte with ultraviolet rays, thereby eliminating the possibility of bubble generation in the electrolyte and improving transmittance characteristics and durability.

According to the present disclosure, the transparent electrode layer and the current dispersion layer may be complexly configured, thereby stably maintaining flexible functionality.

According to the present disclosure, the electrolyte protective layers are provided on the two opposite surfaces of the electrolyte, such that the response speed to bleaching and color change increases.

According to the present disclosure, the roll-to-roll method is applied, such that all the processes are implemented as continuous processes, thereby simplifying the production process.

### [Description of Drawings]

FIG. 1 is a view illustrating a first embodiment of a method of manufacturing a flexible electrochromic device according to the present disclosure.
FIG. 2 is a view illustrating a flexible electrochromic device manufactured by the method illustrated in FIG. 1.
FIG. 3 is a view illustrating a second embodiment of the method of manufacturing a flexible electrochromic device according to the present disclosure.
FIG. 4 is a view illustrating a flexible electrochromic device manufactured by the method illustrated in FIG. 3.
FIG. 5 is a view illustrating a third embodiment of the method of manufacturing a flexible electrochromic device according to the present disclosure.
FIG. 6 is a view illustrating a flexible electrochromic device manufactured by the method illustrated in FIG. 5.

### [Modes of the Invention]

Hereinafter, embodiments of a method of manufacturing a flexible electrochromic device according to the present disclosure will be described in detail with reference to the drawings.

However, it should be noted that the intrinsic technical spirit of the present disclosure is not limited by the following exemplary embodiment, and the following exemplary embodiment may easily be substituted or altered by those skilled in the art based on the intrinsic technical spirit of the present disclosure.

In addition, the terms used herein are selected for convenience of description and should be appropriately interpreted as a meaning that conform to the technical spirit of the present disclosure without being limited to a dictionary meaning when recognizing the intrinsic technical spirit of the present disclosure.

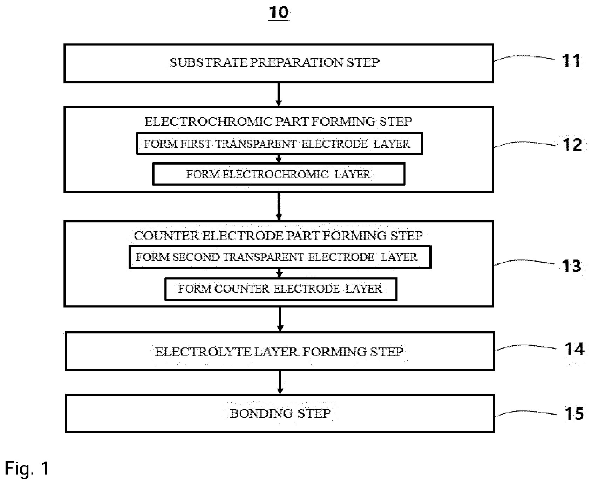

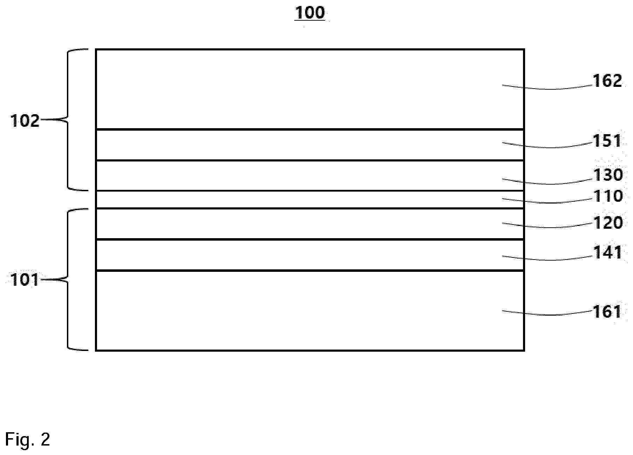

FIG. 1 is a view illustrating a first embodiment of a method of manufacturing a flexible electrochromic device according to the present disclosure, and FIG. 2 is a view illustrating a flexible electrochromic device manufactured by the method illustrated in FIG. 1.

Referring to FIGS. 1 and 2, a method 10 of manufacturing a flexible electrochromic device according to the present embodiment includes a substrate preparation step 11, an electrochromic part forming step 12, a counter electrode part forming step 13, an electrolyte layer forming step 14, and a bonding step 15.

The substrate preparation step (first step) 11 is a step of preparing first and second substrates 161 or 162 made of a flexible polymer.

The first and second substrates 161 and 162 are made of a material selected from a group consisting of polyethylene terephthalate (PET), polyimide (PI), and polyethylene naphthalate (PEN).

The electrochromic part forming step (second step) 12 is a step of sequentially forming a first transparent electrode layer 141 and an electrochromic layer 120 on the first substrate 161 by a roll-to-roll method.

The first transparent electrode layer 141 is formed on the first substrate 161 by roll-to-roll sputtering and made of a material selected from a group consisting of indium tin oxide (ITO), aluminum-doped zinc oxide (AZO), and fluorine-doped tin oxide (FTO).

The electrochromic layer 120 is formed on the first transparent electrode layer 141 by roll-to-roll wet coating or roll-to-roll sputtering.

The electrochromic layer 120 is made of a material selected from a group consisting of WO₃, polyaniline, and viologen.

The counter electrode part forming step (third step) 13 is a step of sequentially forming a second transparent electrode layer 151 and a counter electrode layer 130 on the second substrate 162 by a roll-to-roll method.

The second transparent electrode layer 151 is formed on the second substrate 162 by roll-to-roll sputtering and made of a material selected from a group consisting of indium tin oxide (ITO), aluminum-doped zinc oxide (AZO), and fluorine-doped tin oxide (FTO).

The counter electrode layer 130 is formed on the second transparent electrode layer 151 by roll-to-roll wet coating or roll-to-roll sputtering.

The counter electrode layer 130 is made of a material selected from a group consisting of V₂O₅ and NiO.

The electrolyte layer forming step (fourth step) 14 is a step of forming an electrolyte layer 110 by wet coating on the electrochromic layer 120 of the first substrate 161 or the counter electrode layer 130 of the second substrate 162.

The electrolyte layer 110 is made of a material selected from a group consisting of LiAlF₆, LiPON, and gel and liquid electrolytes

The bonding step (fifth step) 15 is a step of bonding an electrochromic part 101 and a counter electrode part 102 while solidifying the electrolyte layer 110 so that the counter electrode layer 130 and the electrochromic layer 120 may face each other.

In this case, the method may sequentially bond the electrochromic part 101 and the counter electrode part 102 while solidifying the electrolyte layer 110 by irradiating the electrolyte layer 110 with ultraviolet rays.

Therefore, it is possible to prevent bubbles, which may be produced during the solidification, from remaining in the electrolyte. Specifically, the method may bond the electrochromic part 101 and the counter electrode part 102 while solidifying the wet-coated gel type electrolyte with ultraviolet rays, thereby eliminating the possibility of bubble generation in the electrolyte and improving transmittance characteristics and durability.

In this case, a thickness of the electrolyte layer 110 is important for durability and electrochromic characteristics of the electrochromic device 200 according to the present embodiment.

If the thickness is small, the durability deteriorates. If the thickness is large, the durability is improved, but a response speed to bleaching or color change is remarkably reduced.

In this case, the electrolyte layer 110 may have a thickness of 100 um or less.

Meanwhile, according to the present disclosure, since the electrochromic part 101 and the counter electrode part 102 are formed by the roll-to-roll method, all the processes are implemented as continuous processes, thereby simplifying the production process.

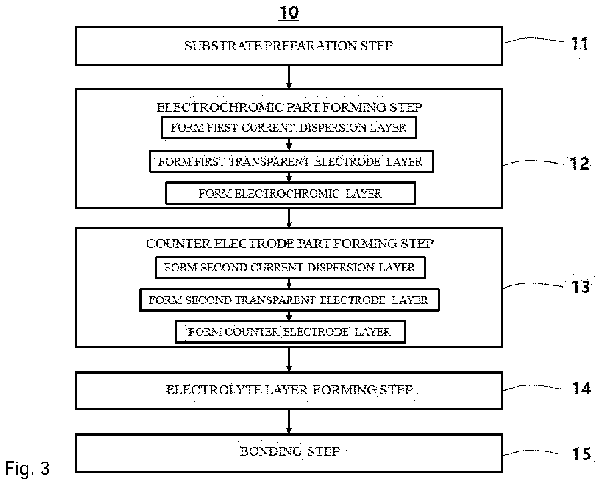

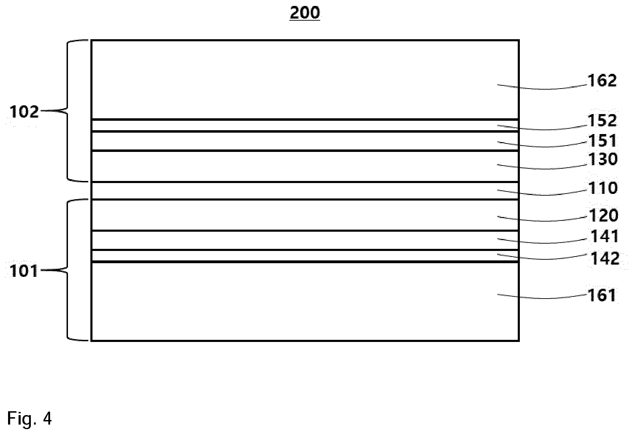

FIG. 3 is a view illustrating a second embodiment of the method of manufacturing a flexible electrochromic device according to the present disclosure, and FIG. 4 is a view illustrating a flexible electrochromic device manufactured by the method illustrated in FIG. 3.

Referring to FIGS. 3 and 4, the method 10 of manufacturing a flexible electrochromic device according to the present embodiment includes all the steps described in the first embodiment. The second embodiment differs from the first embodiment in that a first current dispersion layer 142 is provided between the first substrate 161 and the first transparent electrode layer 141 and a second current dispersion layer 152 is provided between the second substrate 162 and the second transparent electrode layer 151.

The first current dispersion layer 142 is formed on the first substrate 161 by roll-to-roll wet coating before the first transparent electrode layer 141 is formed.

The first current dispersion layer 142 is made of a material selected from a group consisting of silver nanowires (AgNWs), a conductive polymer (PEDOT:PSS), and a metal mesh.

Meanwhile, the second current dispersion layer 152 is formed on the second substrate 162 by roll-to-roll wet coating before the second transparent electrode layer 151 is formed. The second current dispersion layer 152 is made of a material selected from a group consisting of silver nanowires (AgNWs), a conductive polymer (PEDOT:PSS), and a metal mesh.

In the present embodiment, the first and second current dispersion layers 142 and 152 are added. The first and second current dispersion layers 142 and 152 are disposed so as not to adjoin the electrochromic layer 120 and the counter electrode layer 130.

The first and second current dispersion layers 142 and 152 serve to form low composite sheet resistance together with the first and second transparent electrode layers 141 and 142 and enable the thin thickness for maintaining flexible functionality.

In this case, the first and second current dispersion layers 142 and 152 may each have a thickness with sheet resistance of 40 to 60 ohm/sq.

In addition, the thicknesses of the first and second transparent electrode layers 141 and 142 are set such that a first composite layer including the first transparent electrode layer 141 and the first current dispersion layer and a second composite layer including the second transparent electrode layer 151 and the second current dispersion layer 152 each have sheet resistance of 5 to 20 ohm/sq.

Therefore, since the transparent electrode layer and the current dispersion layer are complexly configured, it is possible to stably maintain flexible functionality.

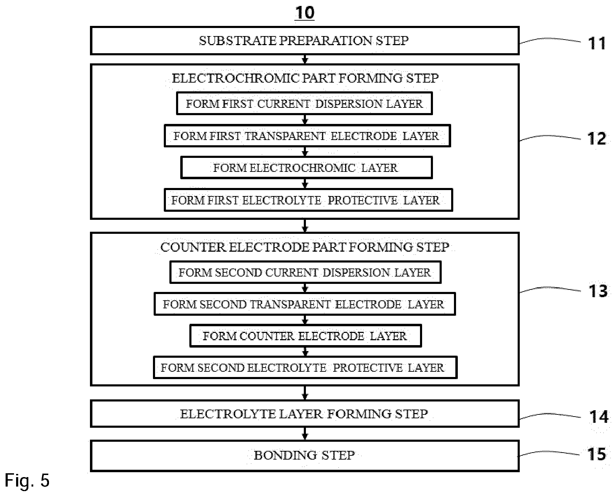

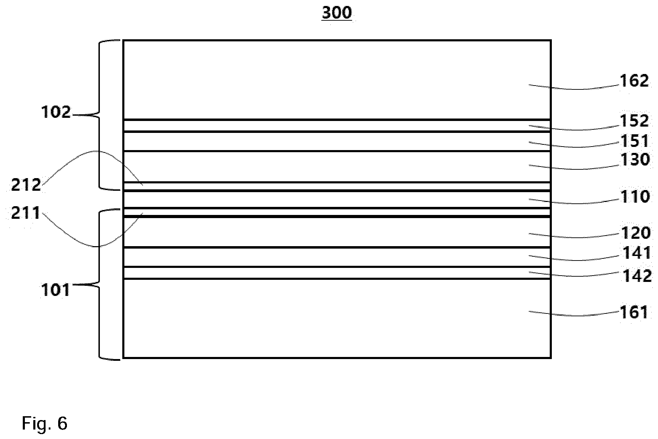

FIG. 5 is a view illustrating a third embodiment of the method of manufacturing a flexible electrochromic device according to the present disclosure, and FIG. 6 is a view illustrating a flexible electrochromic device manufactured by the method illustrated in FIG. 5.

Referring to FIGS. 5 and 6, the method 10 of manufacturing a flexible electrochromic device according to the present embodiment includes all the steps described in the first or second embodiment. However, first and second electrolyte protective layers 211 and 212 are further provided to prevent the electrochromic layer 120 and the counter electrode layer 130 from being in direct contact with the electrolyte layer 110.

The first electrolyte protective layer 211 is provided on the electrochromic layer 120 by roll-to-roll sputtering and made of tantalum oxide (TaₓO_{y}, 2 ≤ x ≤ 3, 3 ≤ y ≤ 6).

The second electrolyte protective layer 212 is provided on the counter electrode layer by roll-to-roll sputtering and made of tantalum oxide (TaₓO_{y}, 2 ≤ x ≤ 3, 3 ≤ y ≤ 6).

In the present embodiment, movements of cations through an interface between the electrolyte layer 110 and the electrochromic layer 120 and an interface between the electrolyte layer 110 and the counter electrode layer 130 may be hindered, thereby preventing electrochromic efficiency or reliability from being degraded by ions trapped in the electrochromic layer 120 and the counter electrode layer 130.

The first and second electrolyte protective layers 211 and 212 may be made of Ta₂O₅.

Therefore, the electrochromic device is stable even in a wide electric field applied with voltage of 3 to 5.5 V. Further, the electrochromic device may also be excellent in contact properties between positive electrodes, thereby improving charging and discharging characteristics and reducing interfacial resistance.

## Claims

1. A method of manufacturing a flexible electrochromic device, the method comprising:
a first step of preparing first and second substrates made of a flexible polymer;
a second step of forming an electrochromic part comprising a first transparent electrode layer formed on the first substrate by roll-to-roll sputtering and made of a material selected from a group consisting of indium tin oxide (ITO), aluminum-doped zinc oxide (AZO), and fluorine-doped tin oxide (FTO), and an electrochromic layer formed on the first transparent electrode layer by roll-to-roll wet coating or roll-to-roll sputtering;
a third step of forming a counter electrode part comprising a second transparent electrode layer formed on the second substrate by roll-to-roll sputtering and made of a material selected from a group consisting of indium tin oxide (ITO), aluminum-doped zinc oxide (AZO), and fluorine-doped tin oxide (FTO), and a counter electrode layer formed on the second transparent electrode layer by roll-to-roll wet coating or roll-to-roll sputtering;
a fourth step of forming an electrolyte layer by wet coating on the electrochromic layer of the first substrate or the counter electrode layer of the second substrate; and
a fifth step of bonding the electrochromic part and the counter electrode part while solidifying the electrolyte layer so that the counter electrode layer and the electrochromic layer face each other.

2. The method of claim 1, wherein the second step comprises forming a first current dispersion layer on the first substrate by roll-to-roll wet coating by using a material selected from a group consisting of silver nanowires (AgNWs), a conductive polymer (PEDOT:PSS), and a metal mesh before forming the first transparent electrode layer, and the third step comprises forming a second current dispersion layer on the second substrate by roll-to-roll wet coating by using a material selected from a group consisting of silver nanowires (AgNWs), a conductive polymer (PEDOT:PSS), and a metal mesh before forming the second transparent electrode layer.

3. The method of claim 2, wherein the first and second substrates are made of a material selected from a group consisting of polyethylene terephthalate (PET), polyimide (PI), and polyethylene naphthalate (PEN).

4. The method of claim 1 or 2, wherein the second step comprises forming a first electrolyte protective layer made of tantalum oxide (TaₓO_{y}, 2 ≤ x ≤ 3, 3 ≤ y ≤ 6) on the electrochromic layer by roll-to-roll sputtering, and the third step comprises forming a second electrolyte protective layer made of tantalum oxide (TaₓO_{y}, 2 ≤ x ≤ 3, 3 ≤ y ≤ 6) on the counter electrode layer by roll-to-roll sputtering.

5. The method of claim 1, wherein the fifth step comprises sequentially bonding the electrochromic part and the counter electrode part while solidifying the electrolyte layer by irradiating the electrolyte layer with ultraviolet rays.

6. The method of claim 2, wherein the first and second current dispersion layers each have a thickness with sheet resistance of 40 to 60 ohm/sq, and the thicknesses of the first and second transparent electrode layers are set such that a first composite layer comprising the first transparent electrode layer and the first current dispersion layer and a second composite layer comprising the second transparent electrode layer and the second current dispersion layer each have sheet resistance of 5 to 20 ohm/sq.

7. The method of claim 1, wherein the electrolyte layer is made of a material selected from a group consisting of LiAlF₆, LiPON, and gel and liquid electrolytes, the electrochromic layer is made of a material selected from a group consisting of WO₃, polyaniline, and viologen, and the counter electrode layer is made of a material selected from a group consisting of V₂O₅ and NiO.

8. The method of claim 1, wherein the electrolyte layer has a thickness of 100 um or less.
